# EUROPEAN PATENT APPLICATION

(11) **EP 3 190 265 A1**
(43) Date of publication of application: **12.07.2017**
(21) Application number: 17150955.7
(22) Date of filing: 11.01.2017
(51) Int. Cl.: F01D 9/04, F01D 5/18

(54) **GAS TURBINE ENGINE WITH A COOLED NOZZLE SEGMENT**

(30) Priority: 11.01.2016 US 201614992432
(71) Applicant: General Electric Company, Schenectady, NY 12345 (US)
(72) Inventor: HERNANDEZ, Wilhelm R. Ramon, Lynn, MA 01910 (US); DEMERS, Daniel Edward, Lynn, MA 01910 (US); HOOPER, Tyler Frederick, Lynn, MA 01910 (US); CORREIA, Victor Hugo Silva, Lynn, MA 01910 (US)
(74) Representative: Williams, Andrew Richard

(57) **Abstract**

An apparatus and method of cooling a hot portion of a gas turbine engine within a nozzle segment (100) comprising an outer and inner band (116) and at least one vane (72) extending between the outer and inner band (116). The outer band (118) includes a forward and aft cavity (136). The apparatus comprises a forward impingement baffle (138) located within the forward cavity (134) comprising a forward cooling chamber (148) and an aft impingement baffle (140) located within the aft cavity (136) comprising an aft cooling air chamber (152). Cooling air (A) introduced into the forward cooling air chamber (148) passes through impingement holes (146) of the forward impingement baffle (138) into a forward impingement chamber (150) then passes through an aperture to the aft cooling air chamber (152), and then passes through the impingement holes (146) of the aft impingement baffle (140) into an aft impingement chamber (143).

## Description

### BACKGROUND

Turbine engines, and particularly gas or combustion turbine engines, are rotary engines that extract energy from a flow of combusted gases passing through the engine onto a multitude of turbine blades. Gas turbine engines have been used for land and nautical locomotion and power generation, but are most commonly used for aeronautical applications such as for airplanes, including helicopters. In airplanes, gas turbine engines are used for propulsion of the aircraft.

Gas turbine engines for aircraft are designed to operate at high temperatures to maximize engine efficiency, so cooling of certain engine components, such as the high pressure turbine and the low pressure turbine, may be necessary. Typically, cooling is accomplished by ducting cooler air from the high and/or low pressure compressors to the engine components which require cooling. When cooling the turbines, cooling air may be passed through an interior of the turbine vanes.

One approach to cooling is to route the compressor air though the interior of the turbine vanes, where the cooling air can then pass into the rotor to cool portions of the rotor. Extracting air from the system to cool components reduces engine efficiency, as this cooling flow does not generate work on the upstream turbine stages that it bypassed. To operate the turbine at high efficiency, it is then desirable to reduce the cooling flow needed to maintain the components within acceptable temperature levels, and thus imperative to use cooling air in the most effective way.

### BRIEF DESCRIPTION

In one aspect, the invention relates to a gas turbine nozzle segment comprising an outer and inner band and at least one vane extending between the outer and inner band. A forward rail, mid-rail, and aft rail extend from the outer band and define a forward cavity between the forward rail and the mid-rail, and an aft cavity between the mid-rail and the aft rail. A forward impingement baffle located within the forward cavity and spaced from the outer band to divide the forward cavity into a forward cooling air chamber radially outboard of the forward impingement baffle and a forward impingement chamber radially inboard of the forward impingement baffle includes impingement holes formed in the impingement baffle to fluidly couple the forward cooling air chamber and the forward impingement chamber. An aft impingement baffle located within the aft cavity and spaced from the outer band to divide the aft cavity into an aft cooling air chamber radially outboard of the aft impingement baffle and an aft impingement chamber radially inboard of the aft impingement baffle includes impingement holes formed in the impingement baffle to fluidly couple the aft cooling air chamber and the aft impingement chamber. Mid-rail apertures passing through the mid-rail fluidly couple the forward impingement chamber to the aft cooling air chamber, wherein cooling air introduced into the forward cooling air chamber passes through the impingement holes of the forward impingement baffle into the forward impingement chamber then passes through the mid-rail aperture to the aft cooling air chamber, and then passes through the impingement holes of the aft impingement baffle into the aft impingement chamber.

In another aspect, the invention relates to a method of cooling a gas turbine nozzle segment having an inner band, outer band, and at least one vane extending between the inner and outer bands, the method comprising: supplying cooling air through a forward impingement baffle located above a forward portion of the outer band to define a forward impingement flow onto the forward portion of the outer band; and supplying the forward impingement flow through an aft impingement baffle located above an aft portion of the outer band to define an aft impingement flow on the aft portion of the outer band.

### BRIEF DESCRIPTION OF THE DRAWINGS

In the drawings:
Figure 1 is a schematic cross-sectional diagram of a gas turbine engine for an aircraft according to a first embodiment.
Figure 2 is a perspective view of a vane segment.
Figure 3 is another perspective view of the vane segment of Figure 2.
Figure 4 is an exploded view of the vane segment of Figures 2.
Figure 5 is a side view of an outboard edge of the vane assembly.
Figure 6 is a cooling circuit diagram of Figure 4.
Figure 7 is a flow chart depicting a method of cooling a gas turbine nozzle segment.

### DETAILED DESCRIPTION

The described embodiments of the present invention are directed to systems, methods, and other devices related to component cooling, particularly in a gas turbine engine, and more particularly to cooling components of a turbine section of a gas turbine engine. For purposes of illustration, the present invention will be described with respect to an aircraft gas turbine engine, with specific component examples of a vane segment for a turbine section. It will be understood, however, that the invention is not so limited and may have general applicability in non-aircraft applications, such as other mobile applications and non-mobile industrial, commercial, and residential applications. It will also have applicability to other components of a gas turbine engine.

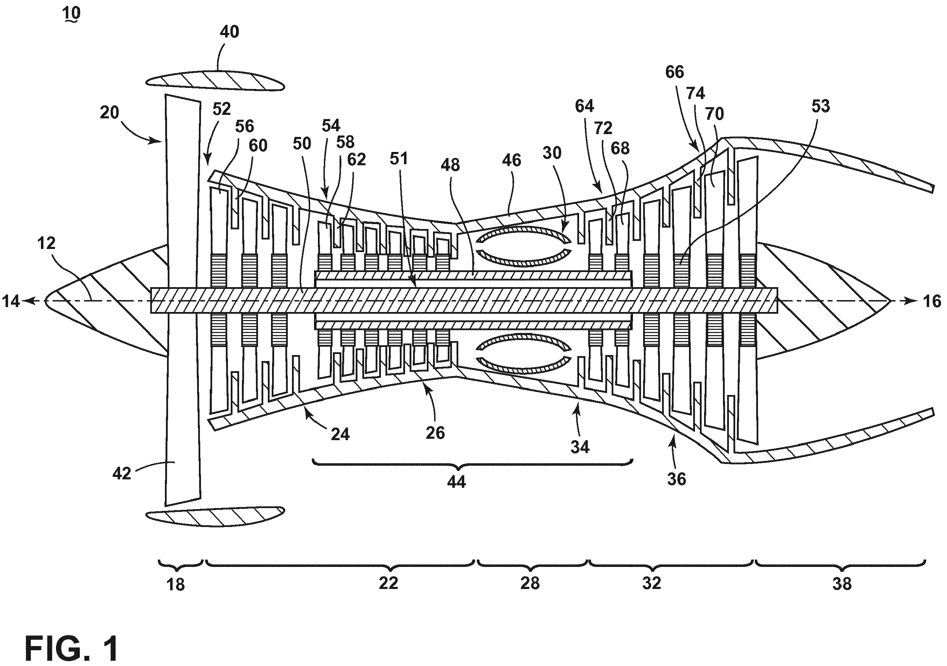

Figure 1 is a schematic cross-sectional diagram of a gas turbine engine 10 for an aircraft. The engine 10 has a generally longitudinally extending axis or engine centerline 12 extending forward 14 to aft 16. The engine 10 includes, in downstream serial flow relationship, an optional fan section 18 including a fan 20, an optional compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The optional fan section 18 includes a fan casing 40 surrounding the fan 20. The fan 20 includes a plurality of fan blades 42 disposed radially about the engine centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the engine centerline 12 of the engine 10 drivingly connects the HP turbine 34 to the HP compressor 26. A LP shaft or spool 50, which is disposed coaxially about the engine centerline 12 of the engine 10 within the larger diameter annular HP spool 48, drivingly connects the LP turbine 36 to the optional LP compressor 24 and optional fan 20 or to a power extraction interface in the case of a turboprop or turboshaft engine. The portions of the engine 10 mounted to and rotating with either or both of the spools 48, 50 are also referred to individually or collectively as a rotor 51.

The LP compressor 24 and the HP compressor 26 respectively include a plurality of compressor stages 52, 54, in which a set of compressor blades 58 rotate relative to a corresponding set of static compressor vanes 60, 62 to compress or pressurize the stream of fluid passing through the stage. In a single compressor stage 54, multiple compressor blades 58 can be provided in a ring and can extend radially outwardly relative to the engine centerline 12, from a blade platform to a blade tip, while the corresponding static compressor vanes 62 are positioned downstream of and adjacent to the rotating blades 58. It is noted that the number of blades, vanes, and compressor stages shown in Figure 1 were selected for illustrative purposes only, and that other numbers are possible. The blades 58 for a stage of the compressor can be mounted to a disk 53, which is mounted to the corresponding one of the HP and LP spools 48, 50, with each stage having its own disk 53. The vanes 62 are mounted to the core casing 46 in a circumferential arrangement about the rotor 51.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, multiple turbine blades 68 can be provided in a ring and can extend radially outwardly relative to the engine centerline 12, from a blade platform to a blade tip, while the corresponding static turbine vanes 72, 74 are positioned upstream of and adjacent to the rotating blades 68, 70. The static turbine vanes 72, 74 can be circumferentially arranged segments, often referred to as nozzle segments or vane segments, with each segment have one or more vanes 72, 74, and most commonly configured as pairs of vanes 72, 74. It is noted that the number of blades, vanes, and turbine stages shown in Figure 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driver of the LP turbine 36 drives the LP spool 50 to rotate the fan 20 and the LP compressor 24.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

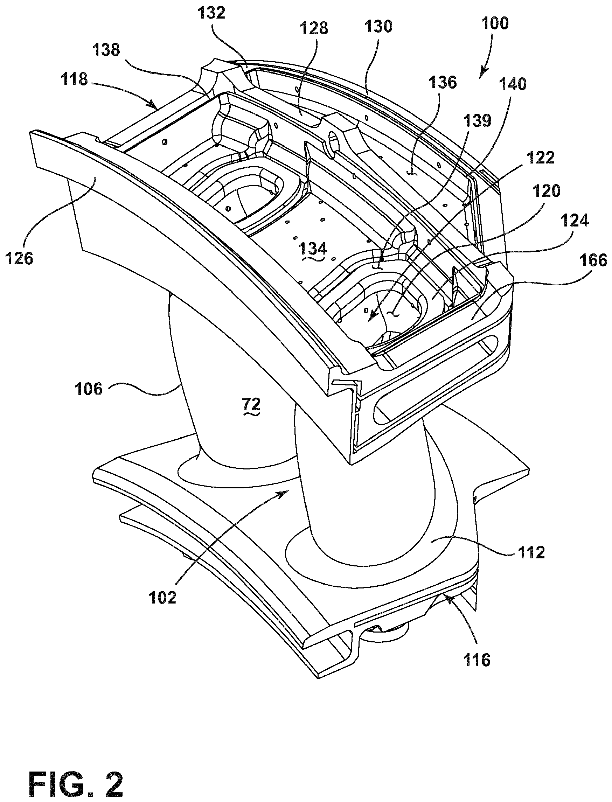

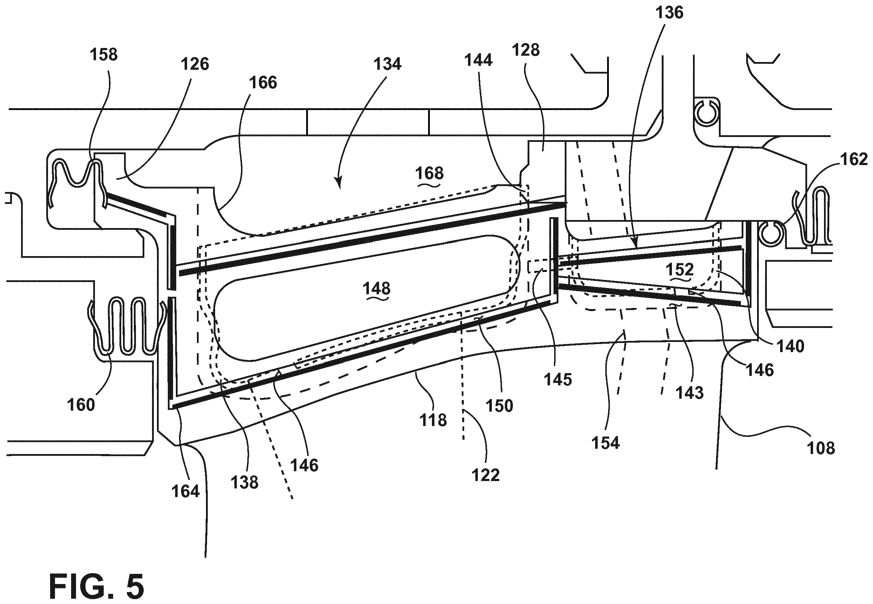

Referring to Figure 2 a nozzle segment 100 for the HP turbine 34 is shown in detail. The nozzle segment includes the pair of vanes 72, 74 which collectively define a gap there between referred to as a nozzle 102. A plurality of nozzle segments 100 can be arranged circumferentially to form a gas turbine nozzle assembly. The vane 72 is shaped as an airfoil body wherein the vane 72 has a leading edge 106 and trailing edge 108 (Figure 5). The vane 72 spans radially from a root 112 to a tip (not shown) where the root 112 is mounted to an inner band 116 and the tip (not shown) is mounted to an outer band 118. The vane 72 has an interior 120 in which a forward vane passage 122 is disposed comprising a forward impingement insert 124 fluidly coupling the outer band 118 to the inner band 116.

The outer band 118 comprises a forward rail 126, mid-rail 128, and an aft rail 130 extending radially from the outer band which terminates in circumferential sides 132 comprising both aft and forward sidewalls. The forward rail 126 and mid-rail 128 define a forward cavity 134 with a quadrilateral shape extending axially from the forward rail 126 to the mid-rail 128. The mid-rail 128 and aft rail 130 define an aft cavity 136 running parallel to the forward cavity 134 between the aft sidewalls 132. A forward impingement baffle 138 is located in the forward cavity 134 and an aft impingement baffle 140 is located within the aft cavity 136. The forward impingement baffle 138 further comprises a forward cooling air passage 139 fluidly coupling the forward cavity 134 to the interior 120 of the vane 62.

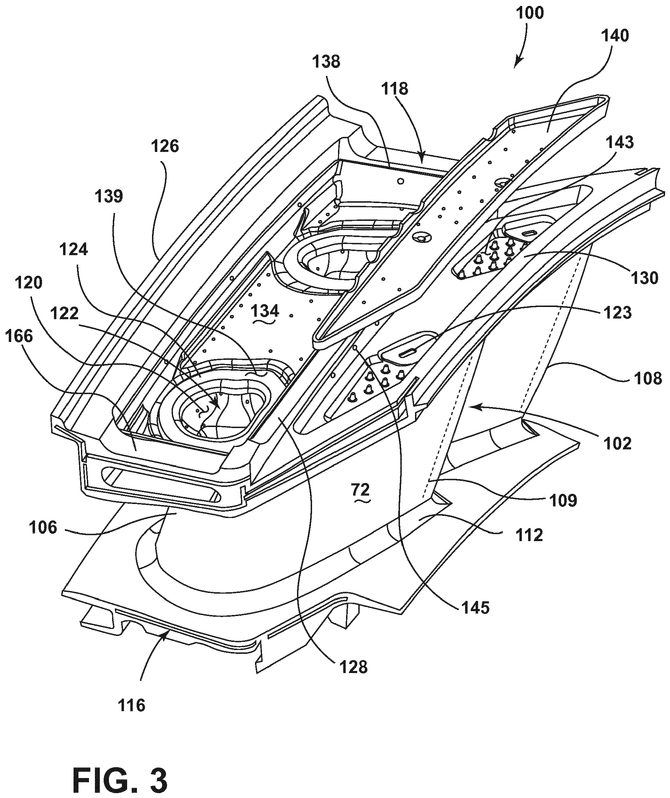

Figure 3 features the aft impingement baffle 140 removed from the aft cavity 136 revealing an aft cooling air passage 123 wherein cooling air exits an aft impingement chamber 143 through the aft cooling air passage 123 which is coupled to the vane interior 120 by means of an aft vane passage (Figure 5). Apertures 145 in the mid-rail 128 are also visible from this perspective.

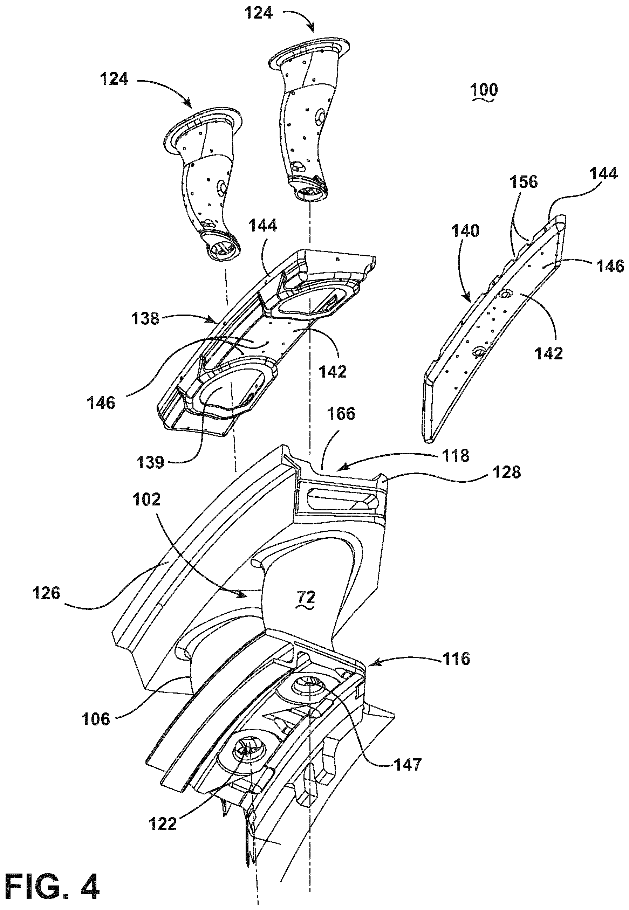

Figure 4 is an exploded view of the nozzle segment 100 more clearly illustrating the forward and aft impingement baffles 138, 140. At least one of the forward impingement baffle 138 and the aft impingement baffle 140 comprises a tub having a bottom 142 and a peripheral wall 144 extending upwardly from the bottom 142 with impingement holes 146 formed at least in the bottom 142. The impingement holes 146 form through channels in both the forward and aft impingement baffles 138, 140. The inner band 116 can include an aperture 147 which comprises an outlet for the forward vane passage 122 or the aft vane passage (Figure 5), so that at least one of the forward 122 or aft vane passages (Figure 5) can extend through the inner band 116.

As can be seen in Figure 5, the forward impingement baffle 138 is spaced from the outer band 118 so as to divide the forward cavity 134 into a forward cooling air chamber 148 radially outboard of the forward impingement baffle 138 and a forward impingement chamber 150 radially inboard of the forward impingement baffle 138. Likewise, the aft impingement baffle 140 is spaced from the outer band 118 so as to divide the aft cavity 136 into the aft cooling air chamber 152 radially outboard of the aft impingement baffle 140 and the aft impingement chamber 143 radially inboard of the aft impingement baffle 140. The aft vane passage 154 fluidly couples the aft impingement chamber to the interior 120 of the vane. The impingement holes 146 fluidly couple both the forward and aft cooling air chambers 148, 152 to the forward and aft impingement chambers 150, 143.

The apertures 145 passing through the mid-rail 128 fluidly couple the forward cavity 134 and the aft cavity 136. Openings 156 are formed in the peripheral walls 144 of the aft impingement baffle 140 in alignment with the mid-rail apertures 145 to fluidly couple the forward impingement chamber 150 to the aft cooling air chamber 152.

Compression seals comprising at least one of an M-seal, W-seal, or C-seal 158, 160, 162 are provided along the forward rail 126 and the aft rail 130. Sliding segments comprising spline seals 164 are located on the circumferential sides 132 of both the forward and aft cavities 134, 136. Together these seals help maintain cavities 148, 150, 152 pressurized by minimizing leakage flow through the interfaces between adjacent nozzle segments and between nozzle segments and the supporting forward and aft structure.

As illustrated in Figures 2, 3, and 4 it should be understood that while the nozzle segment 100 is shown as comprising a vane 72, inner band 116, outer band 118, insert 124, forward and aft impingement tubs, the nozzle segment 100 can include fewer or more components.

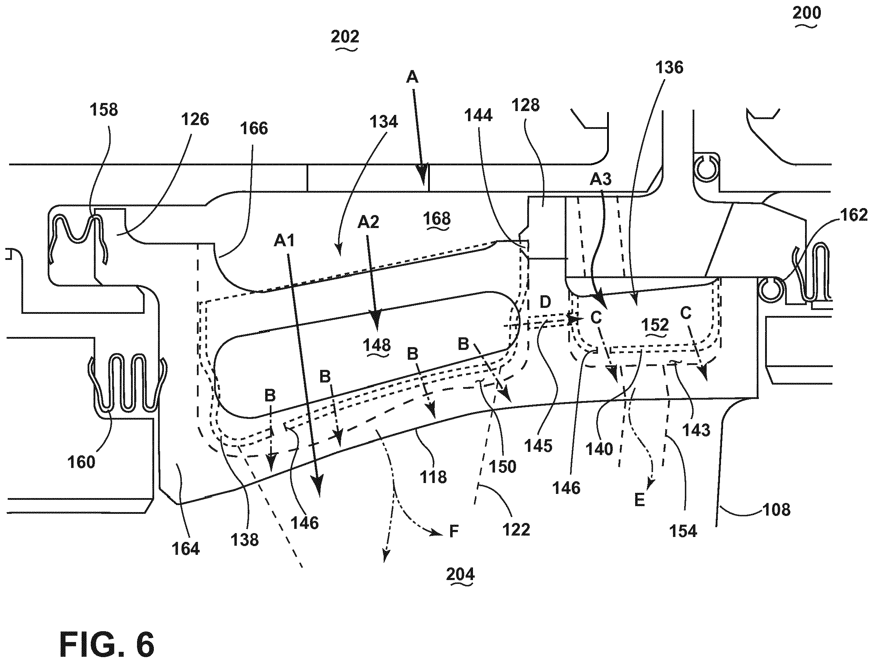

Figure 6 depicts a cooling circuit 200 comprising a cooling air passage for both the forward and aft within the forward and aft impingement cavities 134, 136. Pressure variations existing within the nozzle segment 100 cause air to flow from an area of higher pressure 202 to an area of lower pressure 204. Cooling air A from the fan 20 that has bypassed the combustion section 28 first enters from above both the forward and aft impingement cavities 134, 136 where a first portion of cooling air A1 travels directly through the forward impingement cavity 134 into the forward impingement insert 124. A second portion of the cooling air, A2 and A3 respectively, travels through the forward and aft impingement baffles 138, 140 where impingement holes 146 cause a forward and aft impingement flow B, C from the forward and aft cooling air chambers 148, 152 to the forward and aft impingement chambers 150, 143. Some of the post-impingement air in the forward impingement chamber 150 then travels D through the mid-rail apertures 145 and mixes with cooling air A3, before traveling through the impingement holes 146 in the aft impingement baffle 140. Upon exiting the impingement holes 146 in the aft cooling air chamber, air flow E travels through the aft vane passage 123 to the aperture 147 in the inner band 116 allowing for cooling of further areas of the engine. A portion of the air flow E can also be directed towards the trailing edge 108 through cooling holes 109 for cooling of the vane 62. Though not illustrated, post impingement flow F from the forward impingement baffle 144 can also be directed into the interior 120 of the vane 72.

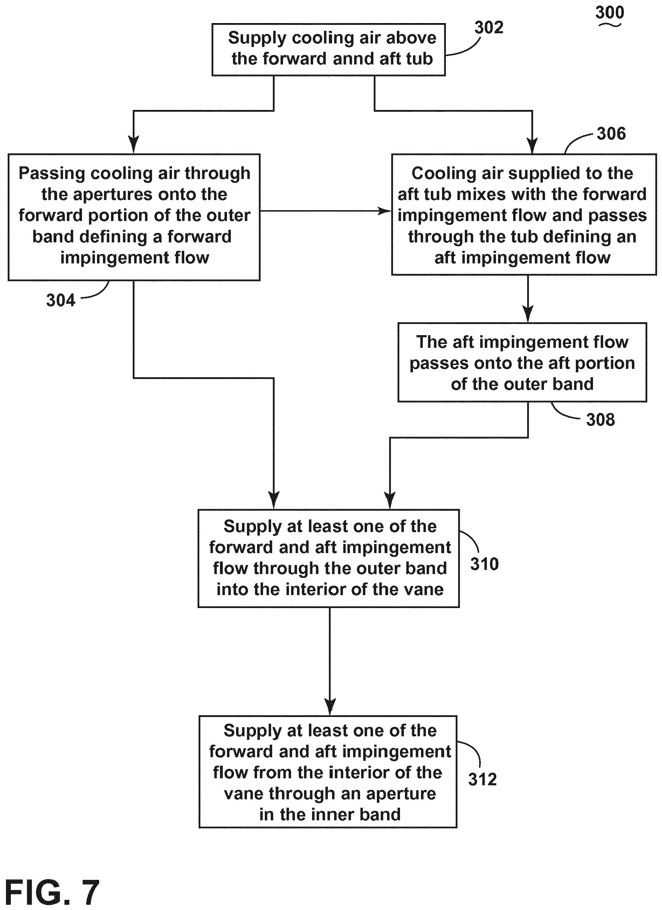

Turning now to Figure 7, a method 300 of cooling a gas turbine nozzle segment is described as first supplying 302 cooling air A above the forward impingement baffle 138 and above the aft impingement baffle 140. At 304, cooling air A2 is supplied to the forward impingement baffle then passes through the impingement holes 146 of the forward impingement baffle 138 defining the forward impingement flow B onto the forward portion of the outer band 118. A portion of the forward impingement flow D is then supplied to the aft impingement baffle 140 through the mid-rail aperture 145 where it mixes at 306 with the cooling air A3 supplied above the aft impingement baffle 140 before passing through the aft impingement baffle 140 defining an aft impingement flow C onto 308 the aft portion of the outer band 118.

At least one of the forward impingement flow B and aft impingement flow C travels through 310 the outer band 118 and into the interior 120 of the vane 72. Finally the method includes supplying 312 at least one of the forward impingement flow and aft impingement flow from the interior 120 of the vane 72 through an aperture 147 in the inner band 116. A portion of air in the aft impingement chamber 143 also flows through the aft vane passage 154 and then exits through the cooling holes 109 drilled into the vane 72 near the trailing edge 108 of the vane 72 to cool the trailing edge 108.

A circumferential flow exists in an upper portion 168 of the forward cavity 134. This circumferential flow is unobstructed by the tub and is free to flow through an upper opening 166 in the circumferential sides 132 of the forward cavity 134.

As new generations of turboprop/turboj et engines strive for higher gains in performance (lower surface film cooling, reduced weight), turbine nozzles are seeing reductions in the allocated cooling air for cooling nozzle segment bands and airfoils, in order to use this air to generate turbine work instead. Meanwhile, the same turbines are targeting hotter engine cycles. This puts increased pressure on designing a nozzle segment that can still meet the demanding component requirements. This proposed solution describes a design that aims at maximizing the utilization of the allocated cooling air on the outer band of a segmented turbine nozzle, while minimizing component weight and part count over conventional designs.

The disclosed design maximizes the utilization of the allotted segment cooling flow to cool nozzle outer band along with offering a reduced-weight mounting system, a simplified assembly and reduced engine costs.

The disclosed design allows for tunability of cooling flows in different zones used for cooling band/airfoil, thereby allowing more flexibility in minimizing required cooling flows, which could translate into a specific fuel consumption reduction. Furthermore, for stator systems with limited space, this design offers a more compact and lighter solution over traditional designs.

It should be appreciated that application of the disclosed design is not limited to turbine engines with fan and booster sections, but is applicable to turbojets and turboprop engines as well.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A gas turbine nozzle segment comprising:
   an outer band;
   an inner band;
   at least one vane extending between the outer and inner bands;
   a forward rail, mid-rail, and aft rail extending from the outer band and defining a forward cavity between the forward rail and the mid-rail, and an aft cavity between the mid-rail and the aft rail;
   a forward impingement baffle located within the forward cavity and spaced from the outer band to divide the forward cavity into a forward cooling air chamber radially outboard of the forward impingement baffle and a forward impingement chamber radially inboard of the forward impingement baffle, with impingement holes formed in the impingement baffle to fluidly coupled the forward cooling air chamber and the forward impingement chamber;
   an aft impingement baffle located within the aft cavity and spaced from the outer band to divide the aft cavity into an aft cooling air chamber radially outboard of the aft impingement baffle and a aft impingement chamber radially inboard of the aft impingement baffle, with impingement holes formed in the aft impingement baffle to fluidly coupled the aft cooling air chamber and the aft impingement chamber; and
   mid-rail apertures passing through the mid-rail and fluidly coupling the forward impingement chamber to the aft cooling air chamber;
   wherein cooling air introduced into the forward cooling air chamber passes through the impingement holes of the forward impingement baffle into the forward impingement chamber, then passes through the mid-rail apertures to the aft cooling air chamber, and then passes through the impingement holes of the aft impingement baffle into the aft impingement chamber.
2. The gas turbine nozzle segment of clause 1, further comprises an aft cooling air passage fluidly coupling the aft impingement chamber to an interior of the vane, wherein the cooling air exits the aft impingement chamber thought the aft cooling air passage.
3. The gas turbine nozzle segment of any preceding clause, further comprising a forward cooling air passage fluidly coupling the forward cooling air chamber to the interior of the vane.
4. The gas turbine nozzle segment of any preceding clause, further comprising a forward vane passage fluidly coupled to the forward cooling air passage, and an aft vane passage fluidly coupled to the aft cooling air passage.
5. The gas turbine nozzle segment of any preceding clause, further comprising a forward impingement insert located within the forward vane passage.
6. The gas turbine nozzle segment of any preceding clause, wherein at least one of the forward or aft vane passages extends through the inner band.
7. The gas turbine nozzle segment of any preceding clause, wherein the outer band terminates in circumferential sides and spline seals are located on the circumferential sides.
8. The gas turbine nozzle segment of any preceding clause, wherein compression seals are provided along the forward rail and the aft rail.
9. The gas turbine nozzle segment of any preceding clause, wherein the compression seals comprise at least one of an M-seal, W-seal, or C-seal.
10. The gas turbine nozzle segment of any preceding clause, further comprising a plurality of gas turbine nozzle segments circumferentially arranged to form a gas turbine nozzle assembly.
11. The gas turbine nozzle segment of any preceding clause, wherein at least one of the forward impingement baffle and the aft impingement baffle comprises a tub having a bottom and a peripheral wall extending upwardly from the bottom, with the impingement holes being formed at least in the bottom.
12. The gas turbine nozzle segment of any preceding clause, wherein both the forward impingement baffle and the aft impingement baffle comprise a tub.
13. The gas turbine nozzle segment of any preceding clause, wherein openings are formed in the peripheral wall in alignment with the mid-rail apertures.
14. A method of cooling a gas turbine nozzle segment having an inner band, outer band, and at least one vane extending between the inner and outer bands, the method comprising:
   supplying cooling air through a forward impingement baffle located above a forward portion of the outer band to define a forward impingement flow onto the forward portion of the outer band; and
   supplying the forward impingement flow through an aft impingement baffle located above an aft portion of the outer band to define an aft impingement flow on the aft portion of the outer band.
15. The method of any preceding clause, further comprising supplying the forward impingement flow through apertures in a mid-rail separating the forward and aft portions of the outer band.
16. The method of any preceding clause, further comprising supplying at least one of the forward impingement flow and aft impingement flow through the outer band and into an interior of the vane.
17. The method of any preceding clause, wherein the at least one of the forward impingement flow and aft impingement flow is the aft impingement flow.
18. The method of any preceding clause, further comprising supplying at least one of the forward impingement flow and aft impingement flow from an interior of the vane through an aperture in the inner band or through cooling holes in the vane.
19. The method of any preceding clause, wherein supplying cooling air through the forward impingement baffle comprises supplying cooling air above the forward impingement baffle.
20. The method of any preceding clause, further comprising supply cooling air above the aft impingement baffle, which mixes with the forward impingement flow prior to passing through the aft impingement baffle.

## Claims

1. A gas turbine nozzle segment (100) comprising:
an outer band (118);
an inner band (116);
at least one vane (72) extending between the outer and inner bands (118, 116);
a forward rail (126), mid-rail (128), and aft rail (130) extending from the outer band (118) and defining a forward cavity (134) between the forward rail (126) and the mid-rail (128), and an aft cavity (136) between the mid-rail (128) and the aft rail (130);
a forward impingement baffle (138) located within the forward cavity (134) and spaced from the outer band (118) to divide the forward cavity (134) into a forward cooling air chamber (148) radially outboard of the forward impingement baffle (138) and a forward impingement chamber (150) radially inboard ofthe forward impingement baffle (138), with impingement holes (146) formed in the impingement baffle to fluidly coupled the and the forward impingement chamber (150);
an aft impingement baffle (140) located within the aft cavity (136) and spaced from the outer band (118) to divide the aft cavity (136) into an aft cooling air chamber (152) radially outboard of the aft impingement baffle (140) and a aft impingement chamber (143) radially inboard of the aft impingement baffle (140), with impingement holes (146) formed in the aft impingement baffle (140) to fluidly coupled the aft cooling air chamber (152) and the aft impingement chamber (143); and
mid-rail apertures (145) passing through the mid-rail (128) and fluidly coupling the forward impingement chamber (150) to the aft cooling air chamber (152);
wherein cooling air (A) introduced into the forward cooling air chamber (148) passes through the impingement holes (146) of the forward impingement baffle (138) into the forward impingement chamber (150), then passes through the mid-rail apertures (145) to the aft cooling air chamber (152), and then passes through the impingement holes (146) ofthe aft impingement baffle (140) into the aft impingement chamber (143).

2. The gas turbine nozzle segment (100) of claim 1, further comprises an aft cooling air passage (123) fluidly coupling the aft impingement chamber (143) to an interior (120) of the vane (72), wherein the cooling air exits the aft impingement chamber (143) thought the aft cooling air passage (123).

3. The gas turbine nozzle segment (100) of claim 2, further comprising a forward cooling air passage (139) fluidly coupling the forward cooling air chamber (148) to the interior (120) of the vane (72).

4. The gas turbine nozzle segment (100) of claim 3, further comprising a forward vane passage (122) fluidly coupled to the forward cooling air passage (139), and an aft vane passage (154) fluidly coupled to the aft cooling air passage (123).

5. The gas turbine nozzle segment (100) of claim 4, further comprising a forward impingement insert (124) located within the forward vane passage (122).

6. The gas turbine nozzle segment (100) of either of claim 4 or 5, wherein at least one ofthe forward or aft vane passages (122, 154) extends through the inner band (116).

7. The gas turbine nozzle segment (100) of any preceding claim, wherein the outer band (118) terminates in circumferential sides (132) and spline seals (164) are located on the circumferential sides (132).

8. The gas turbine nozzle segment (100) of any preceding claim, wherein compression seals are provided along the forward rail (126) and the aft rail (130) and the compression seals (158. 160, 162) comprise at least one of an M-seal (158), W-seal (160), or C-seal (162).

9. The gas turbine nozzle segment (100) of any preceding claim, wherein at least one of the forward impingement baffle (138) and the aft impingement baffle (140) comprises a tub (138, 140) having a bottom (142) and a peripheral wall (144) extending upwardly from the bottom (142), with the impingement holes (146) being formed at least in the bottom (142).

10. The gas turbine nozzle segment (100) of claim 9, wherein openings (156) are formed in the peripheral wall (144) in alignment with the mid-rail apertures (145).

11. A method of cooling a gas turbine nozzle segment having an inner band, outer band, and at least one vane extending between the inner and outer bands, the method comprising:
supplying cooling air through a forward impingement baffle located above a forward portion of the outer band to define a forward impingement flow onto the forward portion of the outer band; and
supplying the forward impingement flow through an aft impingement baffle located above an aft portion of the outer band to define an aft impingement flow on the aft portion of the outer band.

12. The method of claim 11, further comprising supplying the forward impingement flow through apertures in a mid-rail separating the forward and aft portions of the outer band.

13. The method of either of claim 11 or 12, further comprising supplying at least one of the forward impingement flow and aft impingement flow through the outer band and into an interior of the vane.

14. The method of any of claims 11 to 13, further comprising supplying at least one of the forward impingement flow and aft impingement flow from an interior of the vane through an aperture in the inner band or through cooling holes in the vane.

15. The method of any of claims 11 to 14, wherein supplying cooling air through the forward impingement baffle comprises supplying cooling air above the forward impingement baffle.
